# EUROPEAN PATENT APPLICATION

(11) **EP 2 363 380 A1**
(43) Date of publication of application: **07.09.2011**
(21) Application number: 09825982.3
(22) Date of filing: 10.09.2009
(51) Int. Cl.: C02F 1/48

(54) **WATER TREATMENT DEVICE**

(30) Priority: 12.11.2008 JP 2008289467; 27.02.2009 JP 2009045908; 10.07.2009 JP 2009164250
(71) Applicant: Sekisui Chemical Co., Ltd., Osaka 530-8565 (JP)
(72) Inventor: NOSE, Taisuke, Kyoto-shi Kyoto 601-8105 (JP); TASHIMA, Yosuke, Kyoto-shi Kyoto 601-8105 (JP); MINAMITANI, Yasushi, Yonezawa-shi Yamagata 992-8510 (JP)
(74) Representative: ter Meer, Nicolaus
(86) International application number: PCT/JP2009/065824
(87) International publication number: WO 2010/055729

(57) **Abstract**

[Object] An object of the present invention is to provide a water treatment system capable of increasing the treatment rate by causing active species, such as radicals, produced by discharge to efficiently act on treatment water.

[Solution] The water treatment system is **characterized by** including: at least a pair of cylindrical electrode 3 and a linear electrode 4 in a treatment chamber 2, the linear electrode 4 being disposed along the central axis of the cylindrical electrode 3; and treatment water mist supply means 7 for supplying treatment water in the form of mist composed of droplets having a particle diameter of 1500 µm or less to a discharge space generated by applying a high voltage between the cylindrical electrode 3 and the linear electrode 4.

## Description

### Technical Field

The present invention relates to water treatment systems that degrade organic materials, inorganic materials, and microorganisms contained in clean water, sewage, waste water, etc., using active species, such as radicals and ozone, produced by discharge.

### Background Art

Conventionally, ozone is used for treatment, such as oxidative degradation of organic materials in the water, disinfection, deodorization, in the fields of clean water, sewage, industrial waste water, pool, and the like (see Patent Document 1).
However, because ozone has low oxidizing power, it cannot perform mineralization, although it can perform hydrophilization and decomposition. Furthermore, degradation of refractory organic materials, such as dioxin, is impossible.

Accordingly, to improve the treatment performance, a water treatment system has been proposed in which ozone, as well as OH radicals, O radicals, and the like having higher oxidizing power than ozone, are produced by discharge, and treatment water is exposed to a discharge space (also referred to as a "discharge area") containing these ozone and radicals, so that oxidation treatment is performed using not only ozone, but also radicals (see Patent Document 2).
However, because radicals have a short life span and are easily eradicated, the efficiency is low. Thus, oxidation by radicals cannot be fully exhibited with the previously proposed water treatment systems mentioned above.

[Patent Document 1]
   Japanese Unexamined Patent Application Publication No. 9-267096
[Patent Document 2]
   Japanese Unexamined Patent Application Publication No. 2000-279977

### Disclosure of Invention

### Problems to be Solved by the Invention

In view of the above-described circumstances, an object of the present invention is to provide a water treatment system capable of increasing the treatment rate by causing active species, such as radicals, produced by discharge to efficiently act on treatment water.

### Means for Solving the Problems

To achieve the above-described object, a water treatment system of the present invention includes at least one electrode pair in a treatment chamber, the electrode pair including a cylindrical electrode and a linear electrode disposed along the central axis of the cylindrical electrode; and treatment water supply means for supplying treatment water in the form of mist composed of droplets having a particle diameter of 1500 µm or less to a discharge space generated by applying a high voltage between the cylindrical electrode and the linear electrode.

In the present invention, although the treatment water supply means is not specifically limited as long as it can transform the treatment water into mist composed of droplets having a particle diameter of 1500 µm or less, for example, a supplying method by means of spraying from a spray nozzle is suitable. However, the treatment water may be transformed into steam by a steam generating device to be supplied.
The above-described steam generating device is not specifically limited, and examples thereof include devices employing a heating method, an ultrasonic method, and a combination of both methods.

Note that the particle diameter of the droplets constituting the treatment water mist is limited to 1500 µm or less (preferably, from 10 µm to 1500 µm). The reason for this is that, if the particle diameter is too large, the surface area per volume over which the droplets come into contact with active species, such as ozone and radicals, produced in the discharge space decreases, which decreases the treatment efficiency.
In the present invention, the particle diameter of droplets was measured using an immersion method. Droplets were sprayed over a Petri dish filled with silicone oil from the tip of a spray nozzle disposed above the Petri dish and collected by the Petri dish disposed perpendicular to a spray shaft. Images of the collected droplets were immediately captured, and the particle diameters were counted for the respective sizes, so that the Sauter mean diameter, serving as the particle diameter of droplets, was obtained.

It is preferable that the spray angle of the spray nozzle be adjusted such that, among droplets of the treatment water sprayed from the spray nozzle, droplets positioned at the extreme outer edge of the mist are aligned with the extreme outer edge of the discharge space, so as to enable more efficient treatment.
That is, spraying the mist so as to be spread over the extreme outer edge of the discharge space decreases the efficiency. Furthermore, the mist landed on the inner wall surface of the treatment chamber forms large droplets, running down the inner wall surface, which may further decrease the efficiency.

The treatment water mist sprayed from the spray nozzle is directed, for example, from above the discharge space toward the lower side, from below the discharge space toward the upper side, i.e., the discharge space, or from a side of the discharge space toward the discharge space; it is not specifically limited.
Note that, in the present invention, the spray angle (spraying angle) refers to the angle at which the treatment water mist immediately after discharged from spray ports of the nozzle spreads, because the droplets of the treatment water mist sprayed from the nozzle fall describing a parabola.

The number of the spray nozzles is not specifically limited as long as there is one or more spray nozzles. Furthermore, when a plurality of electrode pairs are provided, two or more spray nozzles may be provided.
Although the material of the cylindrical electrodes and the linear electrodes is not specifically limited as long as the material is conductive and has excellent corrosion resistance, stainless steel and titanium are preferable.

Furthermore, regarding the cylindrical electrodes, it is preferable that the cylindrical electrodes have many holes in their walls, the holes being sized to allow the droplets constituting the treatment water mist to pass therethrough, and wire mesh or perforated metal may be used.

It is preferable that the open area ratio of the cylindrical electrode be 50% or more of the apparent area of the outer circumferential surface of the cylinder (the area when the outer circumferential surface of the cylinder is supposed to be a smooth surface), from the standpoint of the treatment efficiency.
Although the size of the holes is not specifically limited as long as the cylindrical shape can be kept and droplets sprayed from the spray nozzle can pass therethrough, a typical opening area is about from 0.01 mm² to 625 mm².

Although the shape of the linear electrode is not specifically limited, examples include a wire electrode, a screw-shaped electrode, a pinholder-shaped electrode, and a wire-brush-shaped electrode. To increase the streamer generating efficiency, those having a shape such that the discharge tip is sharp and pointed, such as a screw-shaped electrode, a pinholder-shaped electrode, and a wire-brush-shaped electrode, are preferable.

It is preferable that each treatment chamber accommodates two or more electrode pairs each composed of a cylindrical electrode and a linear electrode, from the standpoint of the treatment efficiency.
Furthermore, by providing two or more electrode pairs and arranging the central axes of the cylindrical electrodes of the electrode pairs parallel to one another, and moreover by making the cylindrical electrodes have many holes in their walls, the holes being sized to allow the droplets constituting the treatment water mist to pass therethrough, as described above, the droplets having entered the cylindrical electrodes go out through the holes and enter the adj oining cylindrical electrodes. Accordingly, efficient treatment is possible.

Furthermore, when a plurality of the above-described electrode pairs are arranged parallel to one another, and the treatment water mist is sprayed from one spray nozzle toward these electrode pairs from above, it is preferable that a spray shaft of the spray nozzle extend parallel to the central axes of the cylindrical electrodes, and the end surface, on the spray nozzle side, of the cylindrical electrode disposed at a position far from the spray shaft of the spray nozzle be located at a position farther from the spray nozzle than the end surface, on the spray nozzle side, of the cylindrical electrode disposed at a position close to the spray shaft.
That is, with the above-described configuration, the treatment water mist can be supplied to the discharge space without loss, whereby more efficient treatment is possible.

The voltage applied between the cylindrical electrode and the linear electrode is not specifically limited as long as it generates a streamer discharge.

In addition, the water treatment system of the present invention may include a high-voltage power supply for applying a high voltage between the cylindrical electrode and the linear electrode; and a treatment water circulation structure including a receiving tank for receiving water having passed through the treatment chamber and a pump for directing water stored as treatment water in the receiving tank to the treatment water supply means.
That is, the provision of the above-described treatment water circulation structure allows the treatment water to pass through the discharge space several times, improving the degradation rate of treatment target substances.

Furthermore, the water treatment system of the present invention may include gas suction and supply means for sucking gas in the treatment chamber and supplying the sucked gas in a bubble form to the treatment water in a process prior to transformation of the treatment water into droplets.

That is, by configuring such that the gas suction and supply means sucks the gas in the treatment chamber, transforms the gas into a bubble form, and supplies the sucked gas in a bubble form to the treatment water in a process prior to transformation of the treatment water into droplets, unused remaining ozone contained in the gas in the treatment chamber can be efficiently used for degradation of treatment target substances in the treatment water.
Accordingly, by effectively using streamer discharge energy used for producing ozone, not only can the treatment performance be improved, but also a cost reduction can be achieved by an improvement in the energy efficiency.

Furthermore, it is preferable that the gas suction and supply means have a structure capable of supplying gas in the form of microbubbles having a diameter of 100 µm or less (more preferably, 50 µm or less) to the treatment water.
That is, although active components in the supplied gas react with the treatment target substances in the treatment water, the reaction occurs only near the gas-liquid interface because of the poor solubility of the active components in water.
Therefore, increasing the area of the gas-liquid interface, in other words, reducing the diameter of the bubbles to be injected, is effective to increase the degradation efficiency of the treatment target substances.

Although the method of generating micro bubbles is not specifically limited, examples include a super-high-speed rotary shearing method, a venturi-vacuum bubble-forming method, and a high-speed agitation method.
Although the place where the gas suction and supply means supplies gas is not specifically limited as long as it occurs in a process prior to transformation of the treatment water into droplets, examples include the water tank of the treatment water and a treatment water pipe extending from the water tank to a place where droplets are generated.

It is preferable that the water treatment system of the present invention include oxygen supply means for supplying oxygen to the treatment chamber to increase the efficiency of producing ozone, O radicals, and OH radicals by providing an oxygen-rich atmosphere. That is, with the configuration as above, in which the oxygen supply means for supplying oxygen is provided in the treatment chamber, the treatment chamber is filled with an oxygen-rich atmosphere, whereby production of nitrogen oxide due to oxidation of nitrogen component in the air can be prevented. In addition, because O radicals, OH radicals, and ozone are produced at high concentrations, more efficient degradation of organic materials is possible.
Note that the oxygen supply means may supply either solely oxygen or a gas containing oxygen, such as, air.

In addition, the water treatment system of the present invention may be configured to include a plurality of electrode units each including at least one electrode pair, the electrode units being removably attached to fitting positions defined on circumferential walls of the treatment chamber. The spray nozzle of the treatment water supply means may be provided so as to spray the treatment water from the center of the treatment chamber toward the electrode units fitted to the fitting positions.
Furthermore, a plurality of the electrode units may be configured to be arranged vertically in the treatment chamber.

Although the material of the treatment chamber is not specifically limited as long as the inner surface has excellent corrosion resistance, examples include stainless steel and fiber reinforced plastic. It is preferable that the treatment chamber is formed of an insulating material or covered by an insulating material to prevent current leakage.
Furthermore, from the standpoint of the ease of maintenance, it is preferable that the treatment chamber have an attachment/removal opening in the circumferential wall thereof, through which the electrode units in the treatment chamber are attached or removed. A configuration in which electrode-unit supporting and fixing portions are provided on covers of the attachment/removal openings to enable the electrode units to be taken out of the treatment chamber just by opening the covers is also possible.

To supply the treatment water in a mist form to the discharge space, a method in which the treatment water is introduced into the treatment chamber through the treatment water supply pipe, and the treatment water sent via the pump is sprayed in a mist form from the spray nozzle provided at an end of the treatment water supply pipe toward the discharge space is employed. When many electrode pairs are arranged parallel to one another in the electrode units and the cylindrical electrodes have mesh or through-holes, it is preferable that the spray nozzle be disposed so as to spray mist from a direction perpendicular to the side surfaces of the cylindrical electrodes, so that the sprayed mist is supplied to the discharge space through the mesh or through-holes in the cylindrical electrodes.

Furthermore, when the mist is sprayed into the discharge space through the mesh or through-holes in the cylindrical electrodes, it is preferable that a spray nozzle having a structure for spraying the treatment water in the form of quadrangular-pyramid-shaped mist be used to enable the treatment water to be more efficiently supplied to the discharge space, although it is not specifically limited.
For example, a commercially available spray nozzle from H. IKEUCHI & Co., Ltd., under the trade name "square full cone nozzle SSXP" may be used as a spray nozzle having a structure for spraying the treatment water in the form of quadrangular-pyramid-shaped mist.

Furthermore, it is preferable that the water treatment system of the present invention include a receiving tank, below the treatment chamber, for receiving treated water having passed through the discharge space and having been treated; and air supply means for supplying air to the receiving tank.
That is, although oxygen has been consumed in the oxidation of the treatment target substances, the treatment chamber can be refilled with oxygen by supplying air to the receiving tank. In addition, by supplying air through the treated water in the receiving tank, moist air can be supplied to the treatment chamber. Thus, a larger amount of OH radicals having high oxidizing power can be produced.

Although the above-described air supply means is not specifically limited, it is preferable that it can supply air to the receiving tank after minimizing the size of the bubbles as small as possible.
Although the method for making fine bubbles is not specifically limited, examples include an air diffuser having a hard porous membrane for generating fine bubbles, which is made by sintering synthetic resin (e.g., ABS resin, polymethyl methacrylate, polyethylene, and polypropylene), ceramic, or the like; a super-high-speed rotary shearing method; a venturi-vacuum bubble-forming method; a high-speed agitation method; a method in which a microbubble generating nozzle (available from nanoplanet research institute corporation, under the trade name "M2-type microbubble generating device", for example) is provided at the tip of an air supply pipe disposed in the receiving tank.

Furthermore, when the above-described air supply means is provided, it is preferable that a treated-water outflow path for allowing the treated water to flow out of the treatment chamber by making the treated water received by the receiving tank overflow, the treated-water outflow path having an inlet near the bottom of the receiving tank, be provided, so as to prevent the air supplied to the receiving tank from flowing out of the receiving tank with the treated water and so as to enable the supplied air to be more effectively used.
Although the above-described treated-water outflow path is not specifically limited, it may be defined by, for example, a baffle plate that divides the inside of the receiving tank except for a portion on the bottom side of the receiving tank. Advantages

As has been described above, the water treatment system of the present invention includes at least one electrode pair in a treatment chamber, the electrode pair including a cylindrical electrode and a linear electrode disposed along the central axis of the cylindrical electrode; and treatment water supply means for supplying treatment water in the form of mist composed of droplets having a particle diameter of 1500 µm or less to a discharge space generated by applying a high voltage between the cylindrical electrode and the linear electrode. Accordingly, organic materials in the droplets of the treatment water mist are efficiently degraded by active species produced by discharge, such as ozone, OH radicals, and O radicals.
That is, by applying a high voltage between the cylindrical electrode and the linear electrode, a long cylindrical discharge space can be formed. Because the treatment water in the form of droplets having a particle diameter of as small as 1500 µm or less is supplied to this long cylindrical discharge space, the area of the treatment water over which it comes into contact with the active species increases. Accordingly, the treatment target substances in the treatment water are efficiently degraded in a short period of time.

Furthermore, if the cylindrical electrodes have many holes in their walls, the holes being sized to allow the droplets constituting the treatment water mist to pass therethrough, the droplets can be supplied to the discharge space even when the treatment water mist is sprayed from a side of the cylindrical electrodes.

### Brief Description of Drawings

[FIG. 1] FIG. 1 is a cross-sectional view of a water treatment system according to a first embodiment of the present invention.
[FIG. 2] FIG. 2 is a diagram schematically showing a water treatment system according to a second embodiment of the present invention.
[FIG. 3] FIG. 3 is a diagram schematically showing a water treatment system according to a third embodiment of the present invention.
[FIG. 4] FIG. 4 is a diagram schematically showing a water treatment system according to a fourth embodiment of the present invention.
[FIG. 5] FIG. 5 is a diagram schematically showing a water treatment system according to a fifth embodiment of the present invention.
[FIG. 6] FIG. 6 is a diagram schematically showing cylindrical electrodes and linear electrodes of a water treatment system according to a sixth embodiment of the present invention, viewed from above.
[FIG. 7] FIG. 7 is a cross-sectional view schematically showing a water treatment system according to a seventh embodiment of the present invention.
[FIG. 8] FIG. 8 is a cross-sectional view schematically showing a water treatment system according to an eighth embodiment of the present invention.
[FIG. 9] FIG. 9 is a cross-sectional view schematically showing a water treatment system according to a ninth embodiment of the present invention.
[FIG. 10] FIG. 10 is a cross-sectional view of the relevant part of the water treatment system in FIG. 9.
[FIG. 11] FIG. 11 is a cross-sectional view schematically showing a water treatment system according to a tenth embodiment of the present invention, showing a treatment chamber body portion taken along a horizontal plane.
[FIG. 12] FIG. 12 is a vertical cross-sectional view showing a water treatment system according to an eleventh embodiment of the present invention, showing a treatment chamber body portion taken along a vertical plane.
[FIG. 13] FIG. 13 is a front view of a water treatment system according to a twelfth embodiment of the present invention.
[FIG. 14] FIG. 14 is a plan view of the water treatment system in FIG. 13.
[FIG. 15] FIG. 15 is a cross-sectional view taken along line X-X in FIG. 13.
[FIG. 16] FIG. 16 is a cross-sectional view showing the inside of a treatment tank of the water treatment system in FIG. 13, for describing a state in which electrode units are fitted.
[FIG. 17] FIG. 17 is a cross-sectional view taken along line Y-Y in FIG. 15.
[FIG. 18] FIG. 18 is a perspective view of the relevant part of the water treatment system in FIG. 13, in which an attachment/removal opening is open.
[FIG. 19] FIG. 19 is a front view of the electrode unit of the water treatment system in FIG. 13.
[FIG. 20] FIG. 20 is a front view of a cylindrical electrode block of the electrode unit in FIG. 19.
[FIG. 21] FIG. 21 is a plan view of a cylindrical-electrode fixing plate of the cylindrical electrode block in FIG. 20.
[FIG. 22] FIG. 22 is a cross-sectional view of the relevant part, for describing a state in which the cylindrical electrode is fixed to the cylindrical-electrode fixing plate of the cylindrical electrode block in FIG. 20.
[FIG. 23] FIG. 23 is a plan view of a linear-electrode fixing plate of the electrode unit in FIG. 19.
[FIG. 24] FIG. 24 is a cross-sectional view for describing a state in which the electrode unit in FIG. 19 is fixed to an upper electrode support.
[FIG. 25] FIG. 25 is a cross-sectional view for describing a state in which the electrode unit in FIG. 19 is fixed to a lower electrode support.
[FIG. 26] FIG. 26 is a wiring diagram of a high-voltage pulse generating device of the water treatment system in FIG. 13.
[FIG. 27] FIG. 27 is a cross-sectional view schematically showing a treatment tank of a water treatment system according to a thirteenth embodiment of the present invention.
[FIG. 28] FIG. 28 is a graph showing the degradation treatment time and change in concentration of ethylene glycol, performed in Example 5.
[FIG. 29] FIG. 29 is a graph for obtaining the degradation rate of indigocarmine, performed in Example 6.
[FIG. 30] FIG. 30 is a diagram showing the comparison of the ethylene glycol degradation performances in Examples 14 to 17.
[FIG. 31] FIG. 31 is a diagram showing the comparison of the parachlorophenol degradation performances in Examples 18 to 21.

### Reference Numerals

1a, 1b, 1c, 1d, 1e, 1f, 1g, 1h, 1i, 1j, 1k: water treatment system
1m, 1n: water treatment system
2: treatment chamber
21: treatment chamber body
3, 3a, 3b: cylindrical electrode
4: linear electrode
5: treatment water tank (receiving tank)
6: pump
7: shower nozzle (spray nozzle)
8: high-voltage pulse generating device (high-voltage power supply)
W: treatment water
M: treatment water mist
300, 301, 302: gas suction and supply means
310: intake pipe
320: intake pump
330: exhaust pipe
340: microbubble generating nozzle
350: aspirator portion
400: oxygen supply means
410: oxygen tank
420: oxygen supply pipe
10: high-voltage pulse generating device
W1: treatment water
W2: treated water
502: treatment tank
502a: treatment chamber
502b: receiving tank
523: attachment/removal opening
524: cover
525a: upper electrode support
525b: lower electrode support
527: overflow pipe
520: baffle plate
520a: gap
503: electrode unit
531: linear electrode
534: cylindrical electrode
504: treatment water supply means
542b: spray nozzle
506: air supply means
200: bent pipe (treated-water outflow path)

### Best Modes for Carrying Out the Invention

The present invention will be described in detail below, with reference to the drawings showing embodiments.

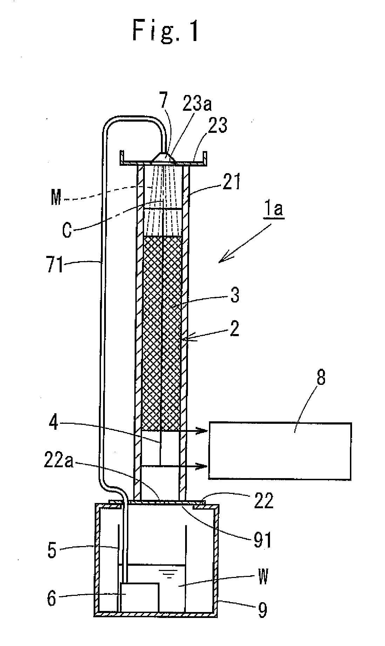

FIG. 1 shows a water treatment system according to a first embodiment of the present invention.

As shown in FIG. 1, a water treatment system 1a includes a treatment chamber 2, a cylindrical electrode 3, a linear electrode 4, a treatment water tank 5 also serving as a receiving tank, a pump 6, a shower nozzle 7 serving as a spray nozzle, a treatment water supply hose 71, a high-voltage pulse generating device 8 serving as a high-voltage power supply, and a treatment-water-tank storage box 9.
The treatment chamber 2 includes a treatment chamber body 21, a lower cover 22, and an upper cover 23.
The treatment chamber body 21 has a cylindrical shape and is formed of an insulating material, such as acrylic resin.
The lower cover 22 is provided so as to close the lower end of the treatment chamber body 21 except for a water-flow hole 22a.
The upper cover 23 is provided so as to close the upper end of the treatment chamber body 21 except for a shower-nozzle provision hole 23a.
The treatment chamber 2 is supported by the periphery of an opening 91 in the treatment-water-tank storage box 9, in a state in which the lower cover 22 covers the opening 91 in the treatment-water-tank storage box 9.

The cylindrical electrode 3 is obtained by, for example, machining a stainless steel net of 1 to 100 mesh, having a thickness of 0.35 mm, into a cylindrical shape, and the outside diameter thereof is slightly smaller than the inside diameter of the treatment chamber body 21.
The linear electrode 4 is formed of, for example, a stainless steel wire having a diameter of 0.28 mm and is provided along the central axis of the cylindrical electrode 3.

The treatment water tank 5 is accommodated in the treatment-water-tank storage box 9 so as to face the water-flow hole 22a in the lower cover 22 from below.
The pump 6 is provided adjacent to the treatment water tank 5 in the treatment-water-tank storage box 9 and sends treatment water W in the treatment water tank 5 to the shower nozzle 7 through the treatment water supply hose 71.

The shower nozzle 7 transforms the treatment water W sent through the treatment water supply hose 71 into mist composed of droplets having a particle diameter of 1500 µm or less and sprays the mist toward an upper opening of the cylindrical electrode 3.
Furthermore, the spray angle of the shower nozzle 7 is adjusted such that the sprayed treatment water mist M, at a maximum-width portion, falls along the inner wall surface of the cylindrical electrode 3, which is the extreme outer edge of the discharge space.

The high-voltage pulse generating device 8 is connected to the cylindrical electrode 3 and the linear electrode 4 such that the cylindrical electrode 3 serves as the ground electrode and the linear electrode 4 serves as the high-voltage applying electrode, and applies a pulsed high voltage between the cylindrical electrode 3 and the linear electrode 4 to cause a streamer discharge between the cylindrical electrode 3 and the linear electrode 4.

A water treatment method using this water treatment system 1a will be described below.
(1) Pour the treatment water W containing treatment target substances, such as organic materials, into the treatment water tank 5.
(2) Apply a pulsed high voltage between the cylindrical electrode 3 and the linear electrode 4 by the high-voltage pulse generating device 8 to create a vertically cylindrical streamer discharge space in the cylindrical electrode 3.
(3) Drive the pump 6 to send the treatment water W in the treatment water tank 5 to the shower nozzle 7 through the hose 71, and spray the treatment water W from above the cylindrical electrode 3 in the central axis direction of the cylindrical electrode 3.
(4) Receive the treatment water W having passed through the treatment chamber 21 again by the treatment water tank 5, and send the treatment water W again to the spray nozzle 7 by the pump.

That is, as described above, this water treatment system 1a circulates the treatment water W for treatment.
Because a streamer discharge produces active species, such as ozone, OH radicals, and O radicals, in the discharge space, and because the droplets of the treatment water mist M sprayed from the shower nozzle 7 come into contact with these active species as falling in the cylindrical discharge space, the treatment target substances, such as organic materials, in the droplets are efficiently subjected to oxidative degradation.
That is, by applying a high voltage between the cylindrical electrode and the linear electrode, a long cylindrical discharge space can be formed. Because the treatment water in the form of droplets having a particle diameter of as small as 1500 µm or less is supplied to this long cylindrical discharge space, the area of the treatment water over which it comes into contact with the active species increases. Accordingly, the treatment target substances in the treatment water are efficiently degraded in a short period of time.

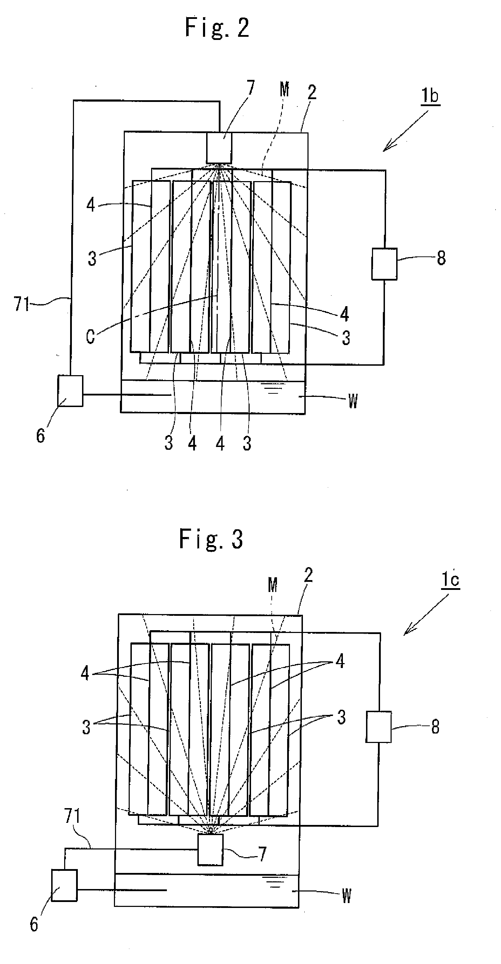

FIG. 2 shows a water treatment system according to a second embodiment of the present invention.
As shown in FIG. 2, a water treatment system 1b is the same as the above-described water treatment system 1a, except that four pairs of the cylindrical electrode 3 and the linear electrode 4, having the same size, are arranged in the horizontal direction in the treatment chamber 2.

FIG. 3 shows a water treatment system according to a third embodiment of the present invention.
As shown in FIG. 3, a water treatment system 1c is the same as the above-described water treatment system 1b, except that the shower nozzle 7 is provided below the cylindrical electrodes 3 and sprays the treatment water mist vertically upward.

In this water treatment system 1c, because the treatment water mist M is sprayed toward the discharge space from below the discharge space, droplets of the treatment water mist M rise for a time and then fall due to the gravity. Thus, the stay time in the discharge space increases, enabling more efficient treatment.

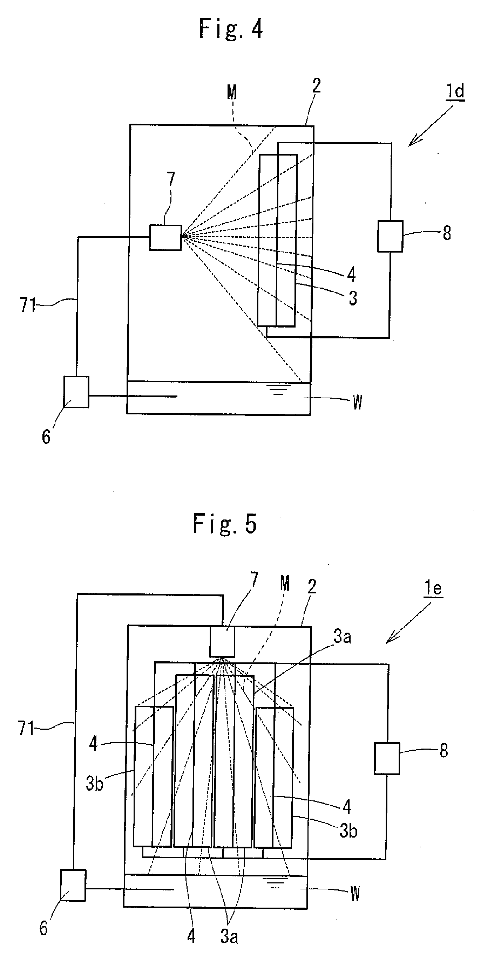

FIG. 4 shows a water treatment system according to a fourth embodiment of the present invention.
As shown in FIG. 4, a water treatment system 1d is the same as the above-described water treatment system 1a, except that the shower nozzle 7 is provided on a side of the cylindrical electrode and the treatment water mist is sprayed in the horizontal direction from a side surface of the cylindrical electrode 3.

FIG. 5 shows a water treatment system according to a fifth embodiment of the present invention.
As shown in FIG. 5, a water treatment system 1e is the same as the above-described water treatment system 1b, except that the length, in the central axis direction, of two cylindrical electrodes 3b far from the spray shaft C of the shower nozzle 7 is smaller than two cylindrical electrodes 3a close to the spray shaft C of the shower nozzle 7, that the upper end surfaces of the short cylindrical electrodes 3b are disposed at positions farther from the shower nozzle 7, i.e., at lower positions, than the upper end surfaces of the long cylindrical electrodes 3a, and that adjustment is done such that the extreme outer edge of the treatment water mist M sprayed from the shower nozzle 7 assuredly falls within the short cylindrical electrodes 3b.

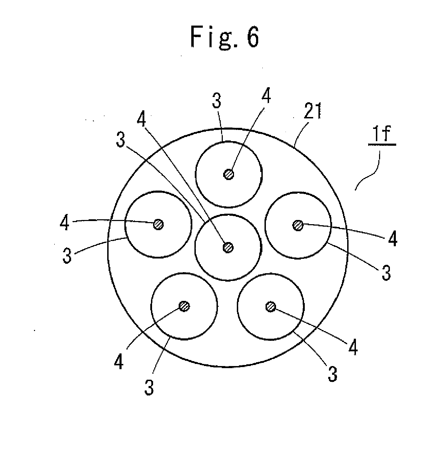

FIG. 6 shows a water treatment system according to a sixth embodiment of the present invention.
As shown in FIG. 6, a water treatment system 1f includes six electrode pairs each consisting of the cylindrical electrode 3 and the linear electrode 4.
One electrode pair is disposed such that the linear electrode 4 is aligned with the central axis of the treatment chamber body 21.
The other five electrode pairs are disposed such that they radially surround the circumference of the above-described one electrode pair and such that the linear electrodes 4 of the five electrode pairs are arranged on the same circumference at equal intervals.
The water treatment system 1f is the same as the above-described water treatment system 1a except for the arrangement of the electrode pairs described above.

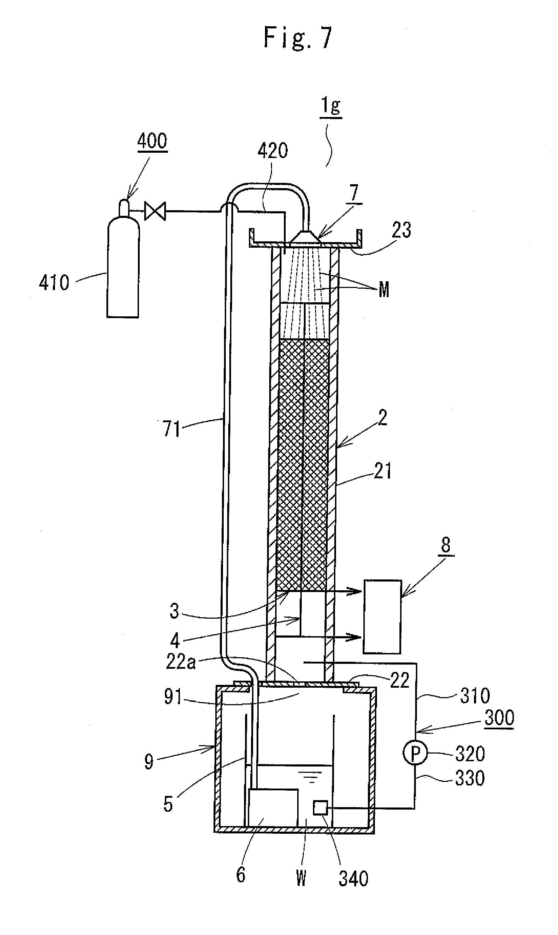

FIG. 7 shows a water treatment system according to a seventh embodiment of the present invention.

As shown in FIG. 7, a water treatment system 1g is the same as the above-described water treatment system 1a shown in FIG. 1, except that it further includes gas suction and supply means 300 and oxygen supply means 400.

The gas suction and supply means 300 includes an intake pipe 310, an intake pump 320, an exhaust pipe 330, and a microbubble generating nozzle (available from nanoplanet research institute corporation, under the trade name "M2-type microbubble generating device", for example) 340.
One end of the intake pipe 310 penetrates the wall of the treatment chamber body 21 below the lower end of the cylindrical electrode 3 and the linear electrode 4 to be present in the treatment chamber body 21, and the other end of the intake pipe 310 is connected to an intake port of the intake pump 320. Note that the portion at which the intake pipe 310 penetrates the treatment chamber body 21 is sealed in an air-tight manner.

One end of the exhaust pipe 330 is connected to an exhaust port of the intake pump 320, and the other end of the exhaust pipe 330 penetrates the side walls of the treatment-water-tank storage box 9 and the treatment water tank 5 to be present in the treatment water tank 5.
The microbubble generating nozzle 340 is connected to the other end of the exhaust pipe 330 in the treatment water tank 5.
That is, the gas suction and supply means 300 takes in gas in the treatment chamber 2 through the intake pipe 310 by the intake pump 320, sends the gas through the exhaust pipe 330 into the treatment water tank 5, and supplies the gas transformed into a microbubble form by the microbubble generating nozzle 340 to the treatment water W in the treatment water tank 5.

The oxygen supply means 400 includes an oxygen tank 410 and an oxygen supply pipe 420.
One end of the oxygen supply pipe 420 is connected to the oxygen tank 410, and the other end of the oxygen supply pipe 420 penetrates the upper cover 23 to be present in the treatment chamber body 21.

Next, a water treatment method using this water treatment system 1g will be described.
First, with the treatment water tank 5 being filled with the treatment water W, a high voltage is applied between the linear electrode 4 and the cylindrical electrode 3 by the high-voltage pulse generating device 8, creating a cylindrical streamer discharge space between the linear electrode 4 and the cylindrical electrode 3. Then, the treatment water W in the treatment water tank 5 is supplied to the spray nozzle 7 through the pump 6 and is sprayed, in the form of the treatment water mist M composed of fine droplets, from the spray nozzle 7 toward the streamer discharge space.

At the same time, oxygen is supplied to the treatment chamber 2 by the oxygen supply means 400 to increase the oxygen concentration in the treatment chamber 2, and the gas in the treatment chamber 2 is sucked from the intake pipe 310 by the gas suction and supply means 300 and is supplied, in a microbubble form, to the treatment water in the treatment water tank 5 through the exhaust pipe 330 and the microbubble generating nozzle 340.
Note that the treatment water W having passed through the streamer discharge space passes through the water-flow hole 22a, returns to the treatment water tank 5, and is supplied again to the spray nozzle 7.

As has been described, because the water treatment system 1g transforms the treatment water W into mist composed of fine droplets and supplies the mist to the streamer discharge space, the treatment water W efficiently comes into contact with the active species, such as radicals and ozone, produced in the discharge space. Thus, the treatment target substances, such as organic materials, in the treatment water W are efficiently degraded with less energy.

Furthermore, because the gas suction and supply means 300 is provided, ozone produced in the discharge space can be used to degrade the treatment target substances without loss. Accordingly, the treatment target substances can be more efficiently degraded.
That is, of the active species produced in the discharge space, radicals have a short life span and change into stable molecules in a short period of time, whereas ozone has a long life span. Accordingly, a portion of the produced ozone that does not come into contact with the treatment water W and is not consumed for degradation of the treatment target substances remains in the treatment chamber 2.
Accordingly, in this water treatment system 1g, gas in the treatment chamber 2 is sucked by the gas suction and supply means 300 and is supplied, in a fine bubble form, to the treatment water W in the treatment water tank 5. This enables the treatment target substances in the treatment water W to be degraded also by the ozone contained in the gas that has not been consumed and has been wasted.
Furthermore, because the gas is transformed into a microbubble form, the contact area with the organic materials increases. Thus, the treatment target substances can be more efficiently degraded.

In addition, in this water treatment system 1g, because oxygen is supplied to the treatment chamber 2 by the oxygen supply means 400, the treatment chamber 2 is filled with an oxygen-rich atmosphere. Accordingly, it is possible to prevent production of nitrogen oxide due to oxidation of nitrogen component in the air, and O radicals, OH radicals, and ozone are produced at high concentrations. As a result, the treatment target substances can be degraded even more efficiently.

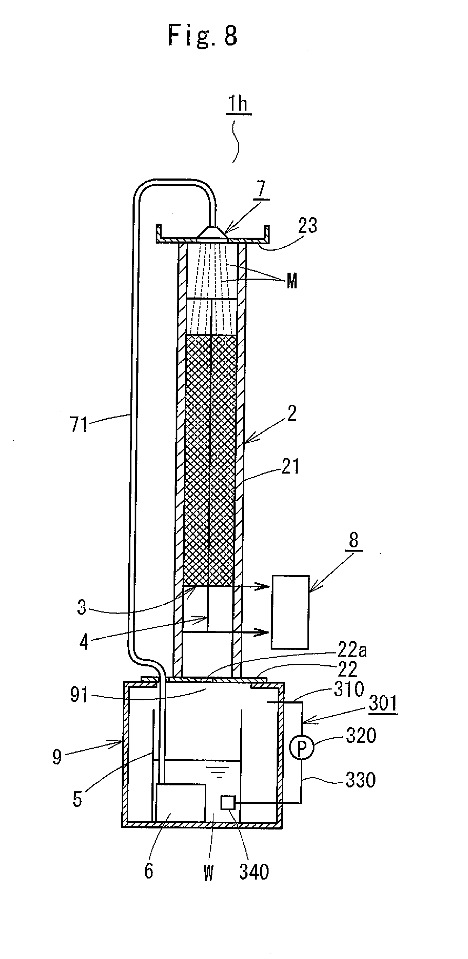

FIG. 8 shows a water treatment system according to an eighth embodiment of the present invention.
As shown in FIG. 8, a water treatment system 1h is the same as the above-described water treatment system 1g, except that the oxygen supply means 400 is not provided, and the intake port of the intake pipe 310 of the gas suction and supply means 301 is present in the treatment-water-tank storage box 9.

Although the treatment performance of this water treatment system 1h is slightly inferior to that of the above-described water treatment system 1g because the oxygen supply means as described above is not provided, this water treatment system 1h has better treatment performance than a water treatment system having no gas suction and supply means 301. Furthermore, because this water treatment system 1h has a simpler structure than the above-described water treatment system 1g, cost can be reduced.

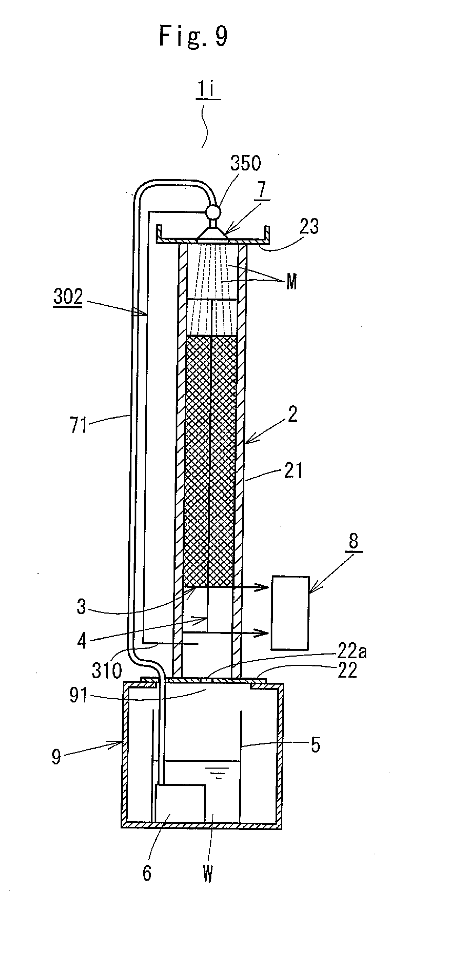

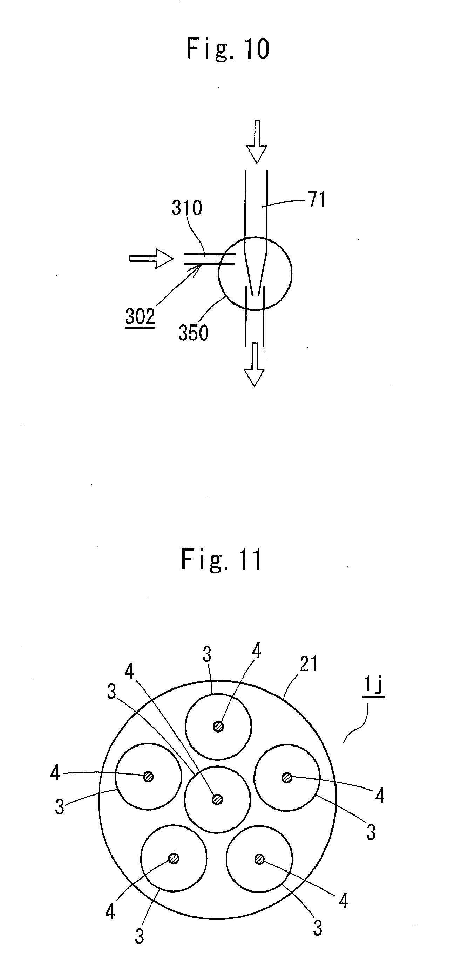

FIG. 9 shows a water treatment system according to a ninth embodiment of the present invention.
As shown in FIG. 9, a water treatment system 1i is the same as the above-described water treatment system 1g, except that the oxygen supply means 400 is not provided and that the gas suction and supply means 302 is formed of the intake pipe 310 and an aspirator portion 350 incorporated near the spray nozzle 7 of the treatment water pipe 71, as shown in FIG. 10.
That is, because the treatment water flowing in the treatment water pipe 71 creates a negative pressure in the aspirator portion 350, the gas suction and supply means 302 sucks the gas in the treatment chamber 2 through the intake pipe 310, transforms the sucked gas into a bubble form, and supplies it to the treatment water W.

Accordingly, although the treatment performance of this water treatment system 1i is slightly inferior to that of the above-described water treatment system 1g, the treatment performance is improved compared with the case where no gas suction and supply means 302 is provided. In addition, because the gas suction and supply means 302 does not require the intake pump 320, cost can be further reduced.

FIG. 11 is a water treatment system according to a tenth embodiment of the present invention.
As shown in FIG. 11, a water treatment system 1j is the same as the above-described water treatment system 1g, except that the treatment chamber body 21 accommodates six electrode pairs, each composed of the linear electrode 4 and the cylindrical electrode 3.

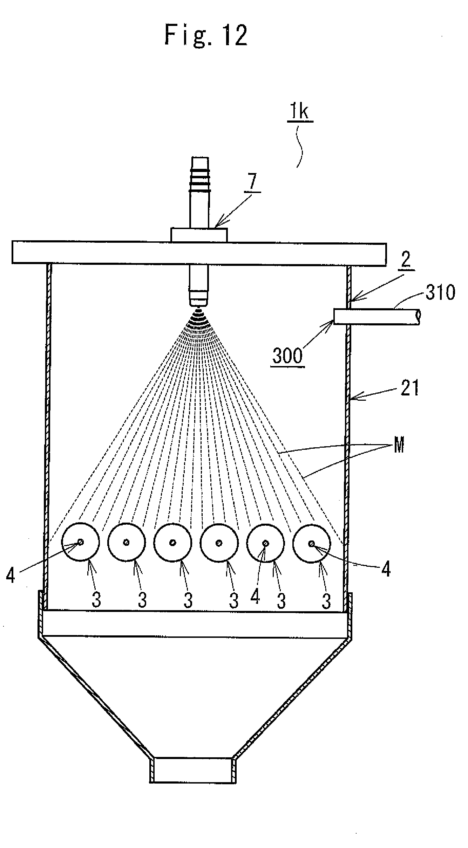

FIG. 12 shows a water treatment system according to an eleventh embodiment of the present invention.
As shown in FIG. 12, a water treatment system 1k is the same as the above-described water treatment system 1g, except that the treatment chamber body 21 accommodates six electrode pairs, each composed of the linear electrode 4 and the cylindrical electrode 3, and that these electrode pairs are disposed side-by-side in the horizontal direction such that the central axes of the cylindrical electrodes 3 are parallel to the surface on which the water treatment system 1k is disposed.

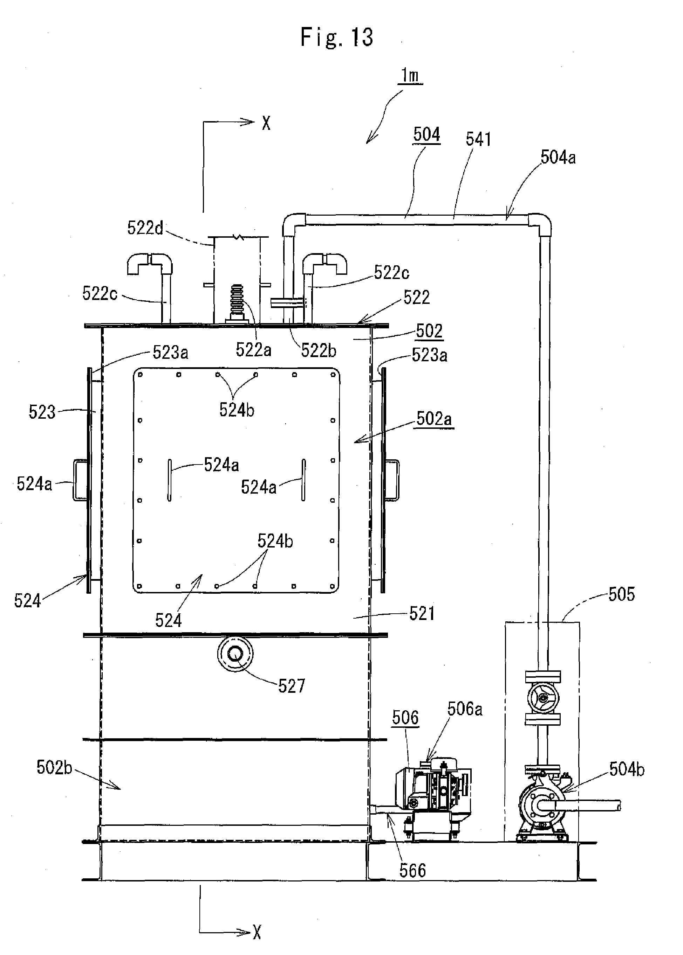

FIGS. 13 to 17 show a water treatment system according to a twelfth embodiment of the present invention.

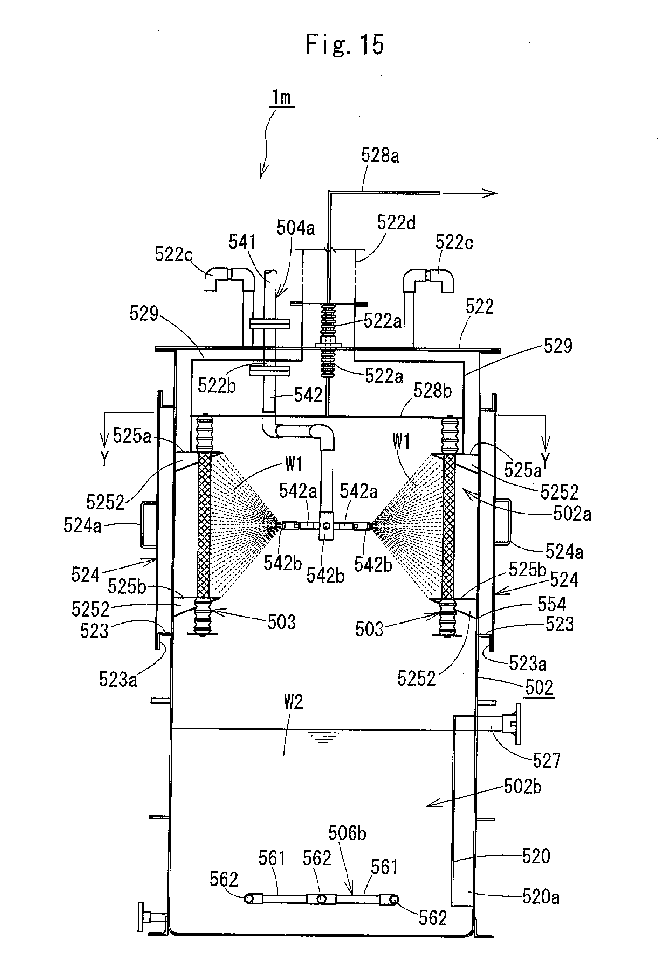

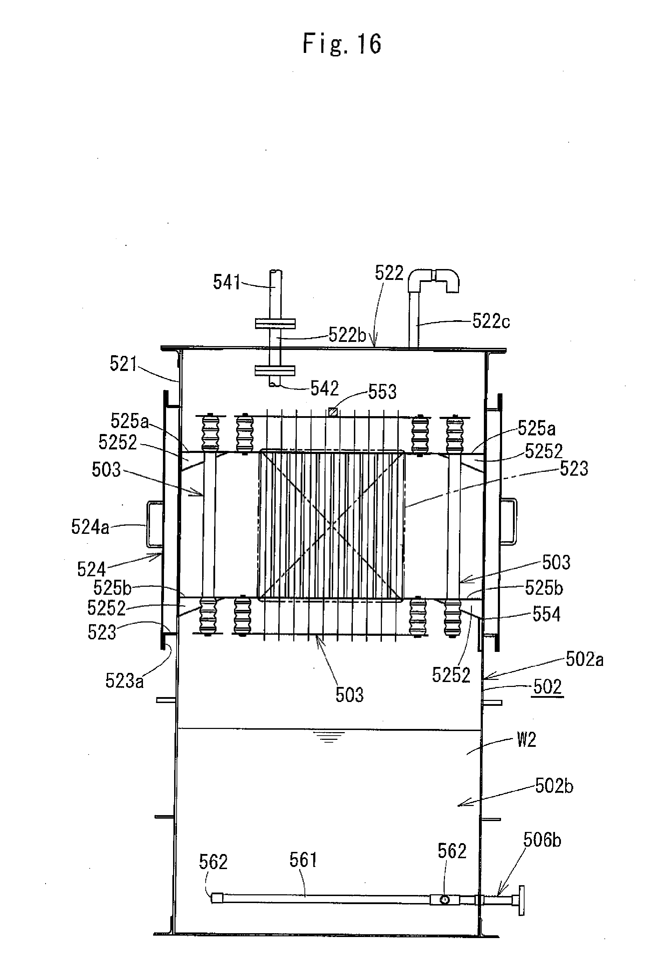

As shown in FIGS. 13 to 17, a water treatment system 1m includes a treatment tank 502, four electrode units 503, treatment water supply means 504, a control box 505, air supply means 506, and a high-voltage pulse generating device 10.
As shown in FIGS. 15 and 16, the treatment tank 502 includes a treatment chamber 502a and a receiving tank 502b and is formed of fiber reinforced plastic (FRP) embedded with wire mesh.

The treatment chamber 502a is formed of a tubular body 521 having a substantially square-tube shape and a top plate portion 522 that closes the upper opening in this tubular body 521.
The top plate portion 522 is provided such that a high-voltage cable introducing pipe 522a, a connecting pipe 522b, two vent pipes 522c, and a high-voltage cable protecting pipe 522d project from the top surface.

The high-voltage cable introducing pipe 522a is provided at the center of the top plate portion 522 and is formed of an insulating material, such as an insulator, through which a high-voltage cable 528a (described below) is inserted.
The connecting pipe 522b is provided in the top plate portion 522, at a position not interfering with the high-voltage cable introducing pipe 522a, and is disposed between an outer pipe 541 and an inner pipe 542 (described below) of the treatment water supply means 504 to connect the outer pipe 541 and the inner pipe 542.

The two vent pipes 522c are provided in the top plate portion 522, at positions not interfering with the high-voltage cable introducing pipe 522a or the connecting pipe 522b and positions symmetrical to each other with respect to the high-voltage cable introducing pipe 522a, and allow the atmosphere in the treatment tank 502 to communicate with the outside of the treatment tank 502.
The high-voltage cable protecting pipe 522d is obtained by, for example, machining a galvanized iron sheet into a duct shape, and is disposed so as to cover the high-voltage cable introducing pipe 522a and a high-voltage cable 528a (described below).

As shown in FIGS. 13, 15 to 18, the tubular body 521 has an attachment/removal opening 523 in each of the four walls.
The attachment/removal opening 523 has a flange 523a protruding around the circumference thereof on the inlet side and can be covered or uncovered by the cover 524.
By removing the cover 524 to open the attachment/removal opening 523, an electrode unit 503 (described below) can be attached or removed.
The cover 524 has two substantially angular U-shaped handles 524a and seals the attachment/removal opening 523 in a water-tight manner by securing the peripheral portion thereof to the flange 523a with bolts 524b, with a sealing packing (not shown) interposed therebetween. Furthermore, by removing the cover 524 by loosening the bolts 524b, the attachment/removal opening 523 can be opened.

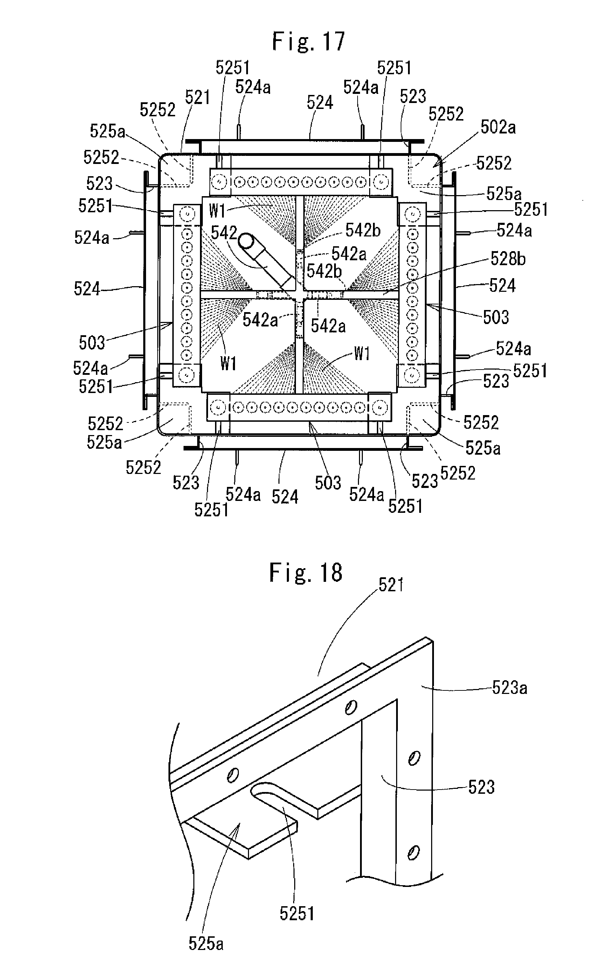

As shown in FIGS. 15 to 18, at the four corners of the tubular body 521, upper electrode supports 525a are provided slightly below the upper ends of the attachment/removal openings 523, and lower electrode supports 525b are provided slightly above the lower ends of the attachment/removal openings 523.
As shown in FIG. 17, the upper electrode supports 525a are substantially L-shaped in plan view and have notches 5251 that are provided in both sides of the L shape, at positions facing the attachment/removal openings 523, and that are open toward the attachment/removal openings 523, as shown in FIGS. 15 and 18.

The notches 5251 are formed such that they have a width slightly larger than bolts 537 and smaller than the outside diameter of nuts 536 and 539.
The notches 5251 are provided such that the distance between the notches 5251 in the adjacent upper electrode supports 525a of the tubular body 521 is equal to the distance between two bolts 537 (described below) of the electrode unit 503.

The lower surfaces of the upper electrode supports 525a are supported from below by reinforcing ribs 5252 having a triangular shape in side view, which are fixed on the inner wall surfaces of the tubular body 521.
The lower electrode supports 525b are shaped such that the upper electrode supports 525a are shifted downward in a parallel manner.

In the receiving tank 502b, an overflow pipe 527 is attached to one side wall surface of a side wall portion.
Furthermore, in the receiving tank 502b, a baffle plate (baffle) 520 is provided along the side wall surface on which this overflow pipe 527 is provided.
The upper end of the baffle plate 520 is located at a height substantially the same as or slightly higher than the upper end of the overflow pipe 527, so as to leave a gap 520a with respect to the bottom plate portion of the treatment tank 502.
That is, the receiving tank 502b is configured such that treated water W2 treated in the treatment chamber 502a passes through the gap 520a provided at the lower end of the baffle plate 520, passes through the treated-water outflow path between the baffle plate 520 and the side wall surface provided with the overflow pipe 527, and is discharged outside from the overflow pipe 527.

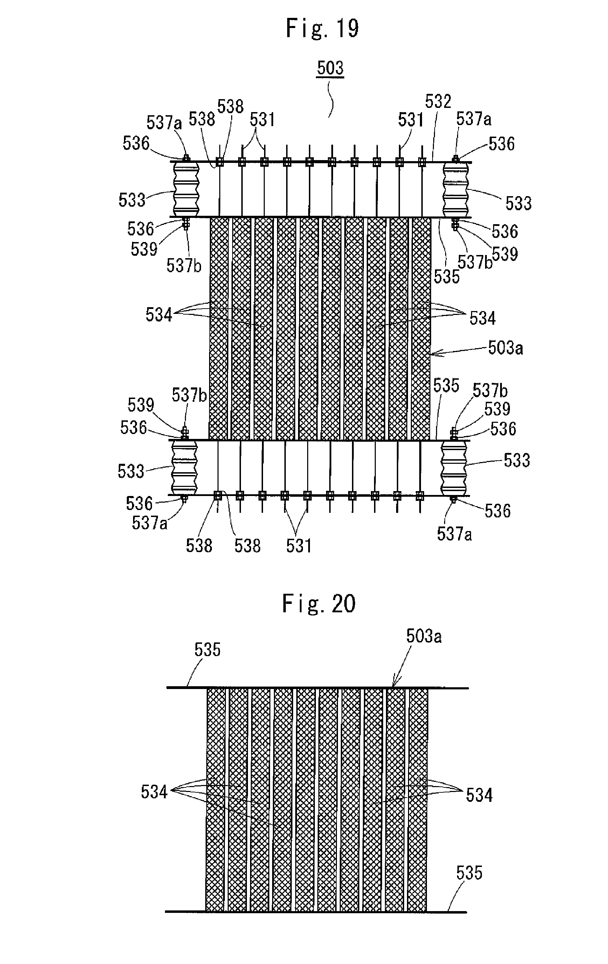

As shown in FIG. 19, each electrode unit 503 includes a cylindrical electrode block 503a, ten linear electrodes 531, two rectangular linear-electrode fixing plates 532, and four insulators 533.
As shown in FIG. 20, the cylindrical electrode block 503a includes ten cylindrical electrodes 534 and two cylindrical-electrode fixing plates 535.

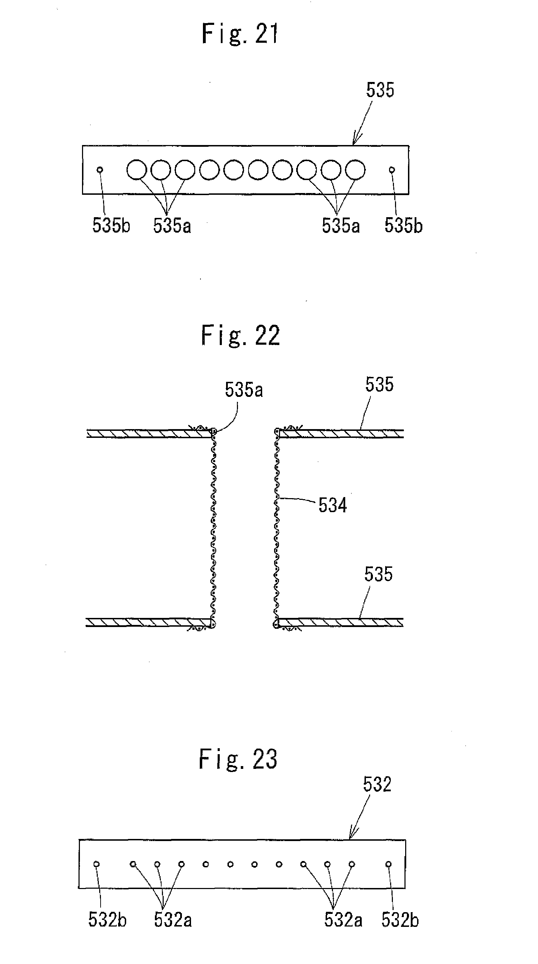

Each cylindrical electrode 534 can be obtained by, for example, machining a stainless steel net of 2.5 mesh with an open area ratio of 79.5%, which is made of a stainless steel wire having a wire diameter of 1.1 mm, into a cylindrical shape. The inside diameter thereof is 40 mm, and the length of the cylindrical portion in the central axis direction is 500 mm.
Each cylindrical-electrode fixing plate 535 can be obtained by, for example, machining a stainless steel plate and, as shown in FIG. 21, has ten cylindrical-electrode fitting holes 535a and two bolt insertion holes 535b.
The ten cylindrical-electrode fitting holes 535a are circular with an outside diameter substantially the same as or a slightly larger than the outside diameter of the cylindrical electrodes 534 and are provided at an interval of, for example, 50 mm.
The bolt insertion holes 535b are provided at both ends of the cylindrical-electrode fitting holes 535a, and bolts 537b of the insulators 533 are inserted therein.

As shown in FIG. 22, the cylindrical electrode block 503a is configured such that both end portions of each cylindrical electrode 534 are inserted into the corresponding cylindrical-electrode fitting holes 535a in the two cylindrical-electrode fixing plates 535, the edge portions are bent outward, bringing the bent portions into contact with the peripheries of the cylindrical-electrode fitting holes 535a in the cylindrical-electrode fixing plates 535. Thus, the cylindrical electrode 534 and the cylindrical-electrode fixing plates 535 are fixed as a single component in an electrically conducting state.

The linear-electrode fixing plates 532 can be obtained by, for example, machining a stainless steel plate and, as shown in FIG. 23, have the same size as the cylindrical-electrode fixing plates 535.
Furthermore, the linear-electrode fixing plates 532 each have linear-electrode insertion holes 532a having a diameter of, for example, 2 mm, at positions corresponding to the central axes of the cylindrical electrodes 534.
In addition, similarly to the cylindrical-electrode fixing plates 535, each linear-electrode fixing plate 532 has bolt insertion holes 532b at both end portions, into which bolts 537a of the insulators 533 are inserted.

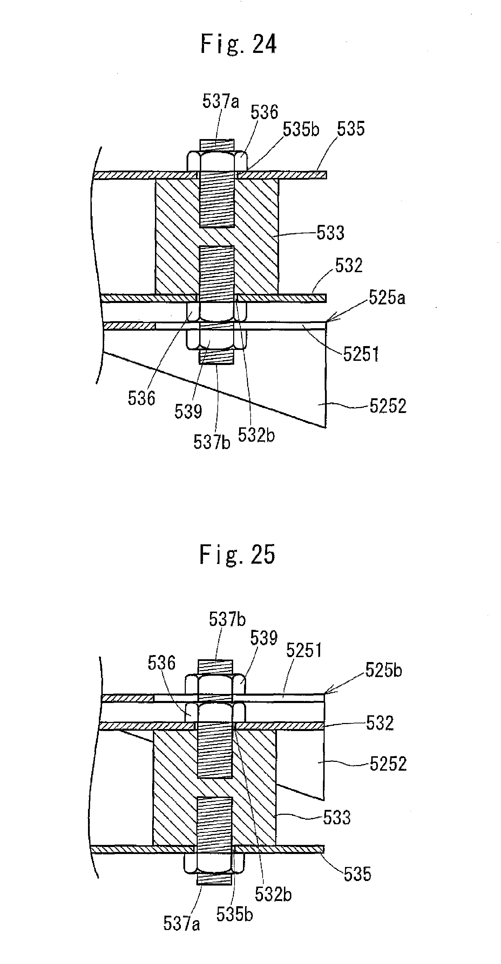

Each insulator 533 integrally includes the bolts 537a and 537b that protrude from both ends. As shown in FIGS. 24 and 25, the bolt 537a and the bolt 537b are insulated from each other inside the insulator 533, and the length of the bolt 537b for fixing the cylindrical-electrode fixing plate 535 protruding from the end surface of the insulator 533 is slightly larger than that of the bolt 537a for fixing the linear-electrode fixing plate 532.
As shown in FIG. 19, the insulators 533 are fixed to the cylindrical-electrode fixing plates 535 with the bolts 537b inserted into the bolt insertion holes 535b in the cylindrical-electrode fixing plates 535 until the end surfaces of the insulators 533 come into contact with the cylindrical-electrode fixing plates 535, and the nuts 536 screwed thereon.

Furthermore, the insulators 533 are fixed to the linear-electrode fixing plates 532 with the bolts 537a inserted into the bolt insertion holes 532b in the linear-electrode fixing plates 532 until the end surfaces of the insulators 533 come into contact with the linear-electrode fixing plates 532, and the nuts 536 screwed thereon.
Furthermore, in this fixed state, the linear-electrode fixing plate 532 and the cylindrical-electrode fixing plate 535 are kept at a distance such that no discharge occurs therebetween (for example, 100 mm).
In addition, the nuts 536 and the nuts 539 for attaching the upper electrode supports 525a or the lower electrode supports 525b are screwed onto the bolts 537b.

The linear electrodes 531 are made of, for example, titanium and have a diameter of 1 mm. The length thereof is slightly larger than the distance between the linear-electrode fixing plates 532 (for example, 750 mm). The outer circumferential surfaces of the linear electrodes 531 are threaded (not shown).
Each linear electrode 531 penetrates through the cylindrical electrode 534, and both end portions thereof are inserted through the linear-electrode insertion holes 532a in the linear-electrode fixing plates 532. By sandwiching the linear-electrode fixing plates 532 between two nuts 38 threaded on the screws provided on the linear electrodes 531, the end portions are fixed onto the linear-electrode fixing plates 532 in an electrically conducted state.

The thus-assembled electrode units 503 are fitted in the treatment chamber 502a as follows.
That is, as shown in FIG. 6, the cover 524 is removed to open the attachment/removal opening 23.
Then, as shown in FIG. 19, the nuts 539 are loosened to provide a gap having a size equal to or larger than the thickness of the upper electrode supports 525a and the lower electrode supports 525b with respect to the nuts 536. Then, the electrode units 503 are inserted into the treatment chamber 502a from the attachment/removal openings 23.
Next, the bolts 537b are slid so that portions between the nuts 539 and 536 are fitted to the notches 251 in the upper electrode supports 525a and the lower electrode supports 525b. Then, as shown in FIG. 24 or 25, the nuts 539 are fastened toward the nuts 536, sandwiching the edges of the notches 251 between the nuts 539 and 536. Thus, the electrode units 503 are fixed to the upper electrode supports 525a and the lower electrode supports 525b.

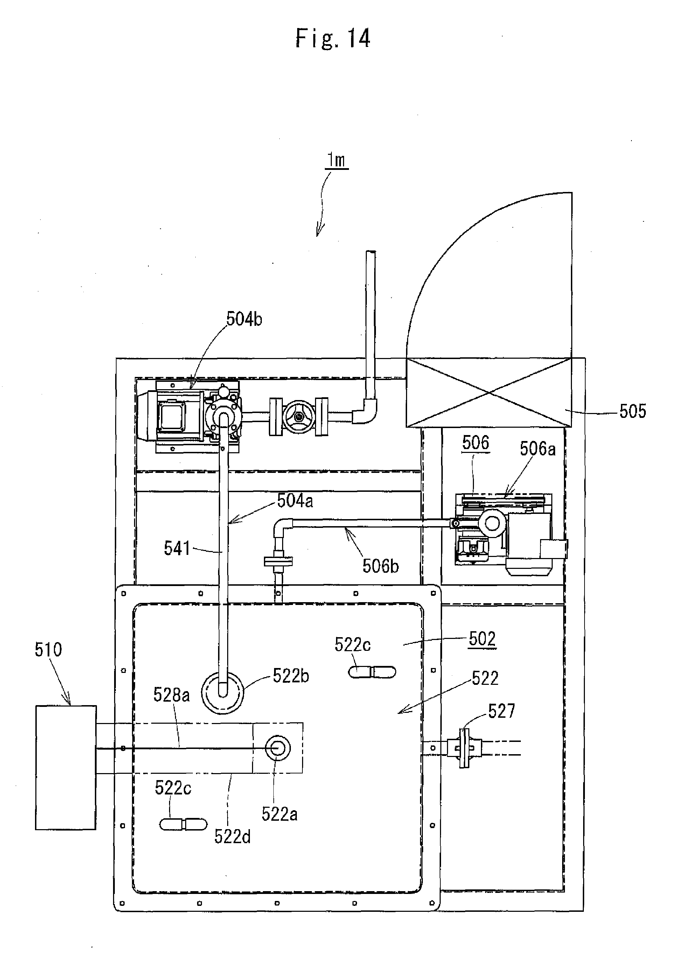

As shown in FIGS. 13 and 14, the treatment water supply means 504 includes a treatment water supply pipe 504a and a treatment water supply pump 504b.
As shown in FIGS. 15 and 16, the treatment water supply pipe 504a includes an outer pipe 541 and an inner pipe 542.

The outer pipe 541 is connected to the connecting pipe 522b of the treatment tank 502 at one end, has the treatment water supply pump 504b at an intermediate portion, as shown in FIGS. 13 and 14, and is connected to the treatment water tank at the other end (not shown).
The inner pipe 542 connected to the connecting pipe 522b at one end in the treatment tank 502 is hung, as shown in FIGS. 15 and 16, and is bent toward the center of the treatment chamber 502a at a position below a bus bar 528b (described below). Then, the inner pipe 542 is hung again at the center of the treatment chamber 502a and is diverged into four diverging pipes 542a extending toward the electrode units 503 installed in the treatment chamber 502a.

The diverging pipes 542a each have a spray nozzle 542b at the tip.
The spray nozzle 542b transforms the treatment water W1 into mist having a size smaller than the mesh of the cylindrical electrodes 534 and sprays the mist in a quadrangular pyramid shape.
Furthermore, each spray nozzle 542b is provided such that the vertical expansion width of the mist when reached the electrode units 503 is substantially the same as the length of the substantially cylindrical electrodes 534 in the central axis direction and such that the expansion width of the mist in the width direction is substantially the same as the distance between the cylindrical electrodes 534 disposed at both ends of the electrode units 503.

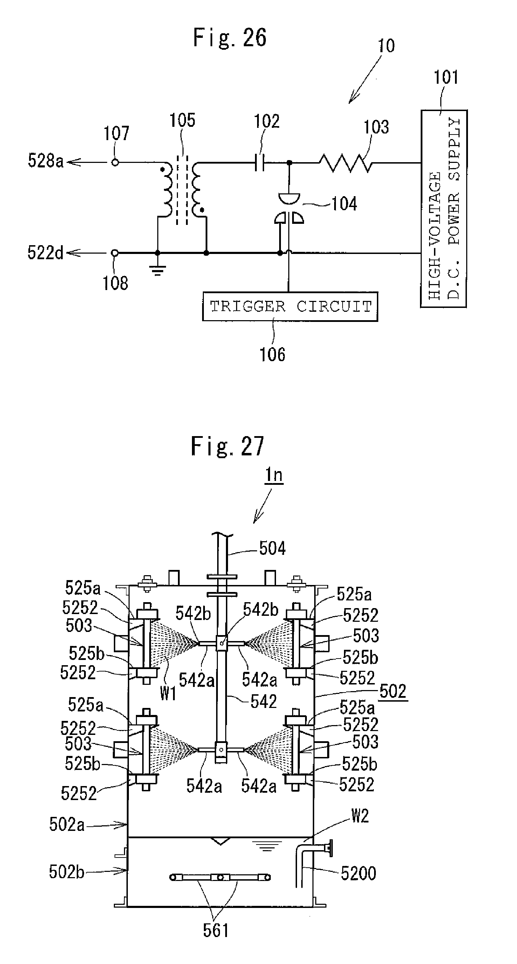

As shown in FIG. 26, the high-voltage pulse generating device 10 includes a high-voltage d.c. power supply 101, a capacitor 102, a resistor 103, a trigatron gap switch 104, a pulse transformer 105, and a trigger circuit 106.

The high-voltage pulse generating device 10 operates as follows.
That is, a current from the high-voltage d.c. power supply 101 is supplied to the capacitor 102 through the resistor 103 to charge the capacitor 102.
After the capacitor 102 is charged to the target voltage, the trigatron gap switch 104 is turned on by a high-voltage trigger pulse from the trigger circuit 106. At this time, electric charges charged in the capacitor 102 flow into the primary side of the pulse transformer 105, generating a pulse-like induced voltage on the secondary side due to the mutual inductance.

The high-voltage pulse thus generated on the secondary side of the pulse transformer 105 is applied between the linear electrodes 531 and the cylindrical electrodes 534.
That is, a terminal 107 is connected to one end of the high-voltage cable 528a and is connected in an electrically conducting state to the linear electrodes 531 via the high-voltage cable 528a, the bus bar 528b, and the linear-electrode fixing plates 532, as will be described below. Furthermore, a terminal 108 is connected to one end of the high-voltage cable protecting pipe 522d and is connected in an electrically conducting state to the cylindrical electrodes 534 via the high-voltage cable protecting pipe 522d, earth wires 529, and the cylindrical-electrode fixing plates 535, as will be described below.

The number of cycles of pulses output between the terminals 107 and 108 is controlled by changing the output frequency of the trigger pulses in the trigger circuit 106. Furthermore, the voltage of the output pulses is controlled by changing the output voltage of the high-voltage d.c. power supply 101.

The high-voltage cable 528a is connected to the terminal 107 of the high-voltage pulse generating circuit 10 at one end and is inserted into the treatment chamber 502a via the high-voltage cable introducing pipe 522a and is connected to the bus bar 528b at the other end.

As shown in FIG. 17, the bus bar 528b is made of stainless steel and has a cross shape in plan view. Although not shown, the other end of the high-voltage cable 528a is connected in an electrically conducting state to the central portion of the cross by welding or bolt-fastening.
As shown in FIGS. 15 and 16, the tip portions of the cross of the bus bar 528b are fixed to the linear-electrode fixing plates 532 of the electrode units 503 fitted at the fitting position with bolts and nuts (not shown) and, hence, are electrically connected to the linear electrodes 531.

As shown in FIG. 15, each earth wire 529 is connected at one end to the high-voltage cable protecting pipe 522d and is fixed at the other end to the cylindrical-electrode fixing plate 535 above the electrode unit 503 with bolts and nuts in an electrically conducting state, while the electrode units 503 are securely supported by the upper electrode supports 525a and the lower electrode supports 525b.

As shown in FIGS. 13 to 16, the air supply means 506 includes an air supply pump 506a and an air supply pipe 506b.
The air supply pump 506a is provided adjacent to the treatment tank 502 and takes in the atmosphere to supply the air to the air supply pipe 506b.
The air supply pipe 506b penetrates the wall of the receiving tank 502b to be present in the receiving tank 502b and diverges in the receiving tank 502b. An air diffuser (available from Daicen Membrane Systems Ltd., under the trade name "PEARL COMB", for example) 562 is fitted at the tip of each diverging pipe 561.
That is, the air supply means 506 takes in the air in the atmosphere and sends it into the receiving tank 502b, supplying the air to the treated water stored in the receiving tank 502b from the air diffuser 62.

The control box 505 accommodates a control circuit (not shown) for the treatment water supply means 504 and air supply means 506.

This water treatment system 1m treats the treatment water W1 as follows, for example.
First, open the cover 24 and set the electrode units 503 to their fitting positions as described above.

Then, connect the bus bar 528b to the linear-electrode fixing plates 532 at the top of the electrode units 503, and connect the four earth wires 529 to the cylindrical-electrode fixing plates 535 at the top of the electrode units 503.
Next, close the cover 24 and activate the high-voltage pulse generating device 10 to apply a high-voltage pulse voltage between the linear electrodes 531 and the cylindrical electrodes 534 to generate a streamer discharge.

Activate the treatment water supply means 504 at a stage when a streamer discharge starts to be generated, causing the spray nozzle 542b to spray the treatment water in a mist form toward the electrode units 503 and supplying the treatment water toward the streamer discharge space through the mesh of the cylindrical electrodes 534.
That is, the treatment water in a mist form supplied to the streamer discharge space as described above comes into contact with active species, such as ozone, OH radicals, and O radicals, produced in the streamer discharge space. Then, organic materials and the like in the treatment water are degraded by the above-mentioned active species.

The degraded treated water W2 received by the receiving tank 502b flows out of the treatment tank 502 through the overflow pipe 527 and is, for example, directly released or reused as wash water.
Furthermore, the air supply means 506 supplies air to the treated water W2 in the receiving tank 502b.

On the other hand, when the linear electrode 531 or the cylindrical electrode 534 needs to be replaced, open the cover 24 while the treatment water supply means 504, the high-voltage pulse generating device 10, and the air supply means 506 are stopped. Then, disconnect the electrode unit 503 having the linear electrode 531 or the cylindrical electrode 534 needing replacement from the bus bar 528b and the earth wire 529, and disconnect the electrode unit 503 from the upper electrode support 525a and the lower electrode support 525b.
Then, take out the electrode unit 503 from the attachment/removal opening 23, replace the linear electrode 531 or the cylindrical electrode 534 needing replacement, fix the electrode unit 503 again as above, and connect it to the bus bar 528b and the earth wire 529. Alternatively, the entire electrode unit 503 may be replaced.

Because this water treatment system 1m generates a streamer discharge between the linear electrodes 531 and the cylindrical electrodes 534 as described above, active species, such as ozone, OH radicals, and O radicals, are efficiently produced between the linear electrodes 531 and the cylindrical electrodes 534. Furthermore, because the treatment water W1 in a mist form is supplied to the streamer discharge space in which these active species are produced, the area over which the active species and the treatment water W1 come into contact with each other increases. Thus, the active species do not decrease or weaken before they attack the treatment target substances in the treatment water W1 and, hence, can efficiently degrade the treatment target substances. Accordingly, degradation can be performed in a short period of time, using less electricity.
In addition, four electrode units 503, each having ten pairs of the linear electrode 531 and the cylindrical electrode 534, can be easily attached or removed from the attachment/removal openings 523. Accordingly, maintenance is easy.

In addition, because the spray nozzle 542b of the treatment water supply means 504 is provided at the central portion of the treatment tank 502, the number of spray nozzles 542b can be reduced. This reduces the size of the supply pipe for the treatment water, enabling a reduction in size of the overall system.
Furthermore, the spray nozzle 542b transforms the treatment water W1 into mist having a size smaller than the mesh of the cylindrical electrodes 534 and sprays the mist in a quadrangular pyramid shape. The vertical expansion width of the mist when reached the electrode units 503 is substantially the same as the length of the substantially cylindrical electrodes 534 in the central axis direction, and the expansion width of the mist in the width direction is substantially the same as the distance between the cylindrical electrodes disposed at both ends of the electrode units 503. Accordingly, the treatment water W1 is efficiently supplied to the streamer discharge space, achieving high treatment efficiency.

This water treatment system 1m includes the air supply means 506 to supply air to the treated water W2 in the receiving tank 502b. Thus, although oxygen has been consumed in the oxidation of the treatment target substances, the treatment chamber 502a can be refilled with oxygen. In addition, by supplying air through the treated water W2, moist air can be supplied to the treatment chamber 502a. Accordingly, more OH radicals, having high oxidizing power, can be produced to further improve the treatment efficiency.
Furthermore, because the baffle plate 520 divides the receiving tank 502b into the overflow pipe 527 portion and an air-bubbling portion formed of the air supply means 506, the air dissolved in the treated water W2 by bubbling does not overflow with the treated water W2. Accordingly, air can be more effectively used.
In addition, the treated water W2 contains active species, such as ozone, which are generated in the treatment chamber 502a and have a long life span. Thus, by providing the baffle plate 520 in the receiving tank 502b to make the treated water W2 stay for a sufficient time, degradation can be further facilitated.

FIG. 27 shows a water treatment system according to a thirteenth embodiment of the present invention.
As shown in FIG. 27, a water treatment system In includes eight electrode units 503 in total. Two electrode units 503 arranged on top of each other are provided on each inner wall surface of the treatment tank 502, and the spray nozzles 542b are also provided vertically in two stages so as to correspond to the electrode units 503. Instead of the baffle plate 520, the treated-water outflow path is formed by a bent pipe 200, an opening end of which is disposed near the bottom of the receiving tank 502b and the other end of which is connected to the overflow pipe 527.

Then, a high-voltage pulse voltage is supplied to the electrode units 503 on the lower stage by fixing a bus bar (not shown) provided so as to penetrate the wall of the treatment tank 502 to the upper linear-electrode fixing plates 532 with bolts and nuts.
Furthermore, this water treatment system In is the same as the water treatment system 1m, except for the above-described configurations.
Thus, when the amount of the treatment water W1 is large, the installation space can be reduced by employing a multi-stage configuration.

Note that the present invention is not limited to the above-described embodiments. For example, although the high-voltage pulse generating device is provided in the above-described embodiments, a commercially available high-voltage pulse generating device may be separately prepared.
Although the above-described water treatment system according to the sixth embodiment has a two-tier structure in which the circumference of one electrode pair is surrounded by five electrode pairs, a three-tier or a four-tier structure is also possible, in which a large number of electrode pairs are disposed on further outside. Alternatively, as in the water treatment system according to the fifth embodiment, the upper end surfaces of the cylindrical electrodes disposed on the outer side may be provided below the upper end surfaces of the cylindrical electrodes disposed on the inner side of the container body.

Although the gas suction and supply means sucks gas at one location in the treatment chamber in the above-described seventh embodiment, suction may be performed at a plurality of locations. Furthermore, the sucked gas may be supplied to both the treatment water tank and the supply pipe.
In addition, the gas suction and supply means according to the seventh embodiment may be used with the gas suction and supply means according to the eighth embodiment, and the gas suction and supply means according to the seventh embodiment and/or the eighth embodiment may be used with the gas suction and supply means according to the ninth embodiment.

Although the treated water in the receiving tank is allowed to overflow from the overflow pipe and is directly released in the above-described twelfth embodiment, a method in which the overflowed treated water is returned to the treatment water tank, circulated for a predetermined period of time, and completely released after a predetermined period of time has elapsed is also possible.

Specific examples of the present invention will be described below by comparison with comparative examples.

### Example 1

Using the water treatment system 1a shown in FIG. 1, treatment water composed of purified water containing 20 ppm indigocarmine was treated, and the time for completing degradation of indigocarmine was studied under the following experimental conditions.
Note that the time for completing degradation was obtained by measuring the absorbance of the treatment water at 610 nm using an ultraviolet and visible spectrophotometer (available from Shimadzu Corporation, under the trade name "UVmini-1240"), and the time required for the absorbance to reach 0 was regarded as the time for completing degradation.

### Experimental Conditions

Amount of treatment water: 15 liters
Spray rate (circulation rate) of treatment water: 12 to 15 liters/min.
Charging voltage: 25 kV
Dischrage repetition rate: 100 pulses/sec.
Mesh of cylindrical electrode: 10 mesh
Inside diameter of cylindrical electrode: 39.5 mm
Length of cylindrical electrode (length in the central axis direction): 300 mm
Particle diameter of treatment water mist: 750 to 970 µm Spray angle of shower nozzle: 30°
Distance from shower nozzle to cylindrical electrode: adjusted such that the extreme outer edge of the treatment water mist was aligned with the upper end of the outer edge of the cylindrical electrode positioned on the extreme outer side.

### Example 2

The time for completing degradation of indigocarmine was studied in the same way as Example 1, except that the particle diameter of the treatment water mist was set to 480 to 660 µm, and the spray angle of the shower nozzle was set to 85° .

### Comparative Example 1

The time for completing degradation of indigocarmine was studied in the same way as Example 1, except that the particle diameter of the treatment water mist was set to 2000 to 2500 µm.

### Example 3

The time for completing degradation of indigocarmine was studied in the same way as Example 1, except that three pairs of the cylindrical electrode and the linear electrode similar to those in Example 1 were arranged parallel to one another such that the central axes of the cylindrical electrodes extended in the vertical direction, as shown in FIG. 2.

### Example 4

The time for completing degradation of indigocarmine was studied in the same way as Example 3, except that the mesh of the cylindrical electrodes was set to 200 mesh.

**[Table 1]**

| | Time for Completing Degradation |
|---|---|
| Example 1 | 9.5 min. |
| Example 2 | 5.5 min. |
| Comparative Example 1 | 20 min. |
| Example 3 | 4 min. |
| Example 4 | 6.5 min. |

From Table 1, with the present invention, it is understood that organic materials can be efficiently degraded in a short period of time.

### Example 5

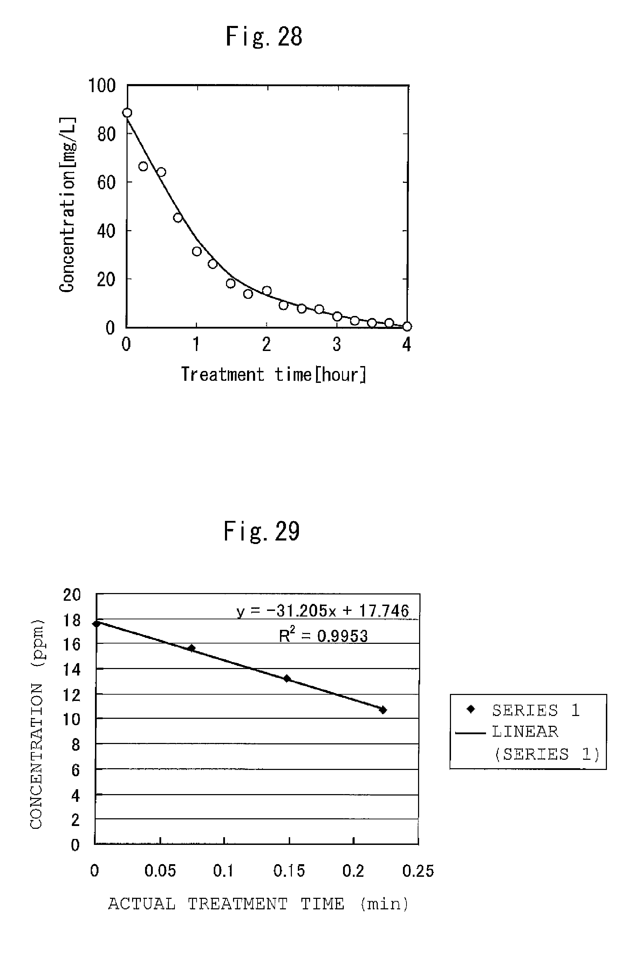

The time for completing degradation was studied using the same water treatment system 1a as Example 1, under the same conditions as Example 1, except that one liter of treatment water containing ethylene glycol of 90 ppm was treated at a spray rate of treatment water of three liters/min. As a result, as shown in FIG. 28, ethylene glycol was degraded in four hours.

### Example 6

Using the water treatment system 1a shown in FIG. 1, treatment water composed of purified water containing about 20 ppm indigocarmine was treated, and the degradation rate was studied by measuring the absorbance of the treatment water at 610 nm every minute using an ultraviolet and visible spectrophotometer (available from Shimadzu Corporation, under the trade name "UVmini-1240").
Note that the time for passing the cylindrical electrodes 3 of the water treatment system 1a was regarded as the treatment time. Furthermore, as shown in FIG. 29, the degradation rate (mg/L·min.) was plotted on a graph where the vertical axis is the concentration of indigocarmine (ppm), and the horizontal axis is the treatment time (min.), the inclination indicating a decrease in concentration. The larger the absolute value of the inclination is, the higher the treatment performance is.

### Experimental Conditions

Amount of treatment water: 5 liters
Spray rate (circulation rate) of treatment water: 14 liters/min. Charging voltage: 25 kV
Dischrage repetition rate: 100 pulses/sec.
Properties of cylindrical electrode: 16 mesh, wire diameter of 0.29 mm, open area ratio of 66.8%, plain weave wire mesh Inside diameter of cylindrical electrode: 39.5 mm
Length of cylindrical electrode (length in the central axis direction): 300 mm
Particle diameter of treatment water mist: 750 to 970 µm Spray angle of shower nozzle: 30°
Distance from shower nozzle to cylindrical electrode: adjusted such that the extreme outer edge of the treatment water mist was aligned with the upper end of the outer edge of the cylindrical electrode positioned on the extreme outer side.

### Example 7

The degradation rate of indigocarmine was studied in the same way as Example 6, except that the particle diameter of the treatment water mist was set to 480 to 660 µm and the spray angle of the shower nozzle was set to 85° .

### Example 8

The degradation rate of indigocarmine was studied in the same way as Example 6, except that the particle diameter of the treatment water mist was set to 340 to 420 µm and the spray angle of the shower nozzle was set to 120° .

### Example 9

Under the following experimental conditions, the degradation rate of indigocarmine was studied in the same way as Example 6, except that six electrode pairs, each composed of a cylindrical electrode (having a length of 50 mm) and a linear electrode, are arranged as in FIG. 6.

### Experimental Conditions

Amount of treatment water: 5 liters
Spray rate (circulation rate) of treatment water: 14 liters/min.
Charging voltage: 25 kV
Dischrage repetition rate: 100 pulses/sec.
Properties of cylindrical electrode: 16 mesh, wire diameter of 0.29 mm, open area ratio of 66.8%, plain weave wire mesh Inside diameter of cylindrical electrode: 39.5 mm
Length of cylindrical electrode (length in the central axis direction): 50 mm x 6
Particle diameter of treatment water mist: 750 to 970 µm Spray angle of shower nozzle: 30°

### Example 10

The degradation rate of indigocarmine was studied in the same way as Example 9, except that the cylindrical electrode formed of plain weave wire mesh having a mesh of 2.5, a wire diameter of 1.1 mm, and an open area ratio of 79.5% was used.

### Example 11

The degradation rate of indigocarmine was studied in the same way as Example 8, except that the cylindrical electrode formed of plain weave wire mesh having a mesh of 3.5, a wire diameter of 1.1 mm, and an open area ratio of 63.3% was used.

### Example 12

The degradation rate of indigocarmine was studied in the same way as Example 8, except that the cylindrical electrode formed of plain weave wire mesh having a mesh of 6.5, a wire diameter of 0.75 mm, and an open area ratio of 65.3% was used.

### Example 13

The degradation rate of indigocarmine was studied in the same way as Example 8, except that the cylindrical electrode formed of plain weave wire mesh having a mesh of 36, a wire diameter of 0.29 mm, and an open area ratio of 35% was used.

### Comparative Example 2

The degradation rate of indigocarmine was studied in the same way as Example 6, except that the particle diameter of the treatment water mist was set to 2000 to 2500 µm.

The results of the degradation rates studied in Examples 6 to 13 and Comparative Example 2 are shown in Table 2.

**[Table 2]**

| | Degradation Rate (mg/L ·min) |
|---|---|
| Example 6 | 31.2 |
| Example 7 | 38.4 |
| Example 8 | 39.7 |
| Example 9 | 70.6 |
| Example 10 | 70.0 |
| Example 11 | 55.5 |
| Example 12 | 56.5 |
| Example 13 | 48.3 |
| Comparative Example 2 | 24.7 |

From Examples 6 to 8 and Comparative Example 2, it is understood that organic materials can be more efficiently degraded in a short period of time when the particle diameter of treatment water is smaller.

Furthermore, from Examples 6 to 8 and 9 to 13 in Table 2, it is understood that organic materials can be more efficiently degraded in a short period of time when a plurality of pairs of the cylindrical electrode and the linear electrode are provided.

Furthermore, from Examples 9 to 13 in Table 2, it is understood that organic materials can be more efficiently degraded in a short period of time if the open area ratio of the cylindrical electrode is higher.

### Example 14

Using the water treatment system 1g having the structure shown in FIG. 7, and under the following treatment conditions, 5 liters of ethylene glycol water solution, i.e., treatment water, whose initial concentration was adjusted to 500 ppm, was treated.

### Discharging Conditions

Linear electrode: stainless steel wire having a wire diameter of 0.28 mm
Cylindrical electrode: a stainless steel net having a mesh of 16 and a wire diameter of 0.28 mm was formed into a cylindrical shape with an outside diameter of φ40 and a length of 300 mm Charging voltage: 29 kV
Dischrage repetition rate: 100 pulses/sec
Pulse width: 100 ns
Gas Supplying Conditions
Air is taken in using an intake pump, at a rate of 0.3 L/min, is transformed into bubbles having an average diameter of about 50 µm using a microbubble generating device (available from nanoplanet research institute corporation, under the trade name "M2-MS/PVC"), and is injected into the ethylene glycol water solution in the water tank.
Oxygen Supplying Conditions
Oxygen is supplied at a rate of 0.3 L/min.
Treatment Water Circulating Conditions
Ethylene glycol water solution was sprayed from the spray nozzle at 0.3 MPa × 5 L/min and is circulated.

### Example 15

Ethylene glycol water solution was treated in the same way as Example 14, except that oxygen was not supplied from the oxygen supply means.

### Example 16

Ethylene glycol water solution was treated in the same way as Example 1, except that gas was not supplied to the water tank using the gas suction and supply means.

### Example 17

Five liters of ethylene glycol water solution whose initial concentration was adjusted to 500 ppm was treated in the same way as Example 14, except that the gas was not supplied to the water tank using the gas suction and supply means and that the oxygen was not supplied from the oxygen supply means.

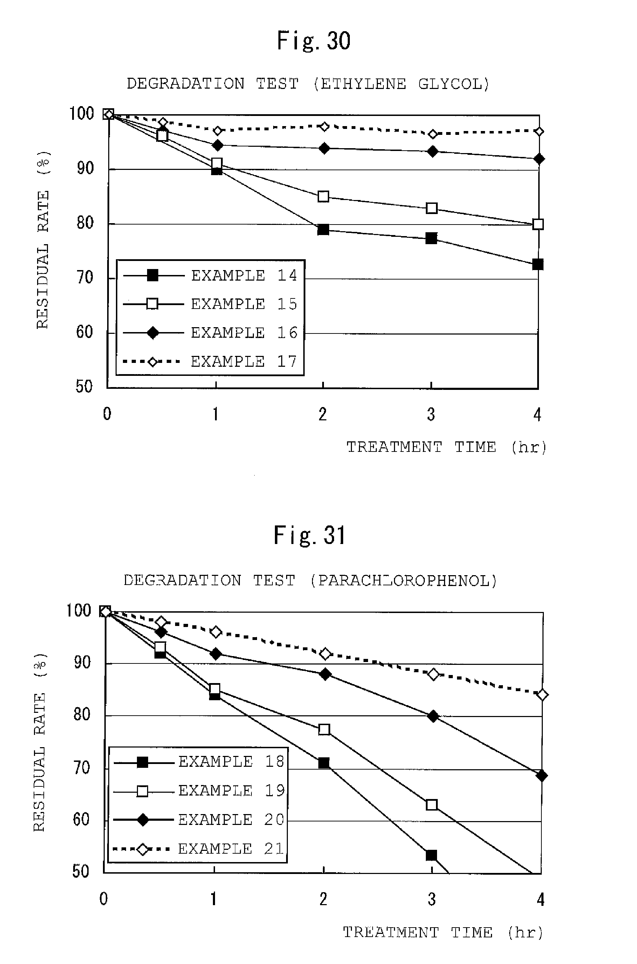

The COD (Chemical Oxygen Demand) of the ethylene glycol water solution with the elapse of time was measured with respect to Examples 14 to 17. The residual rate of the ethylene glycol was calculated utilizing the persistency rate of the COD level. FIG. 30 shows the results.

### Example 18

Parachlorophenol water solution was treated under the same treatment conditions as Example 14, except that five liters of parachlorophenol water solution, i.e., treatment water, whose initial concentration was adjusted to 500 ppm, was used.

### Example 19

Parachlorophenol water solution was treated in the same way as Example 18, except that oxygen was not supplied from the oxygen supply means.

### Example 20

Parachlorophenol water solution was treated in the same way as Example 18, except that gas was not supplied to the water tank using the gas suction and supply means.

### Example 21

Parachlorophenol water solution was treated in the same way as Example 18, except that gas was not supplied to the water tank using the gas suction and supply means, and that oxygen was not supplied from the oxygen supply means.

The COD of the parachlorophenol water solution with the elapse of time was measured with respect to Examples 18 to 21. The residual rate of the parachlorophenol was calculated utilizing the persistency rate of the COD level. FIG. 31 shows the results.

It is understood, from FIGS. 30 and 31, that the provision of the gas suction and supply means increases the degradation rate of treatment target substances compared with the treatment only by means of streamer discharge. Furthermore, it is understood that the degradation rate increases by making the inside of the treatment chamber oxygen-rich by the provision of the oxygen supply means.

### Industrial Applicability

The water treatment system of the present invention can be used for, for example, clarification of waste water containing organic materials, disinfection of contaminated water, and the like although it is not specifically limited.

## Claims

1. A water treatment system comprising:
at least one electrode pair in a treatment chamber, the electrode pair including a cylindrical electrode and a linear electrode disposed along the central axis of the cylindrical electrode; and
treatment water supply means for supplying treatment water in the form of mist composed of droplets having a particle diameter of 1500 µm or less to a discharge space generated by applying a high voltage between the cylindrical electrode and the linear electrode.

2. The water treatment system according to claim 1 comprising the treatment water supply means for spraying the treatment water in a mist form from a spray nozzle.

3. The water treatment system according to claim 2,
wherein the spray angle of the spray nozzle is adjusted such that, among droplets of the treatment water sprayed from the spray nozzle, droplets positioned at the extreme outer edge of the mist are aligned with the extreme outer edge of the discharge space.

4. The water treatment system according to any one of claims 1 to 3,
wherein the cylindrical electrode has many holes in a wall, the holes being sized to allow droplets of the treatment water to pass therethrough.

5. The water treatment system according to claim 4,
wherein the open area ratio of the cylindrical electrode is 50% or more.

6. The water treatment system according to any one of claims 1 to 5 comprising two or more electrode pairs.

7. The water treatment system according to claim 6,
wherein a spray shaft of the spray nozzle extends parallel to the central axes of the cylindrical electrodes, and
wherein the end surface, on the spray nozzle side, of the cylindrical electrode disposed at a position far from the spray shaft of the spray nozzle is located at a position farther from the spray nozzle than the end surface, on the spray nozzle side, of the cylindrical electrode disposed at a position close to the spray shaft.

8. The water treatment system according to any one of claims 1 to 7 comprising a high-voltage power supply for applying a high voltage between the cylindrical electrode and the linear electrode.

9. The water treatment system according to any one of claims 1 to 8 comprising:
a receiving tank for receiving water having passed through a treatment chamber; and
a pump for directing water stored as treatment water in the receiving tank to the treatment water supply means.

10. The water treatment system according to any one of claims 1 to 9 comprising gas suction and supply means for sucking gas in the treatment chamber and supplying the sucked gas in a bubble form to the treatment water in a process prior to transformation of the treatment water into droplets.

11. The water treatment system according to claim 10,
wherein the gas suction and supply means supplies the gas in the form of microbubbles having a diameter of 100 µm or less to the treatment water.

12. The water treatment system according to any one of claims 1 to 11 comprising oxygen supply means for supplying oxygen to the treatment chamber.

13. The water treatment system according to any one of claims 1 to 12 comprising a plurality of electrode units each including at least one electrode pair, the electrode units being removably attached to fitting positions defined on circumferential walls of the treatment chamber,
wherein the spray nozzle of the treatment water supply means is provided so as to spray the treatment water from the center of the treatment chamber toward the electrode units fitted to the fitting positions.

14. The water treatment system according to claim 13, wherein a plurality of the electrode units are arranged vertically in the treatment chamber.

15. The water treatment system according to claim 13 or 14,
wherein the treatment chamber has an attachment/removal opening in the circumferential wall thereof, through which the electrode units are attached or removed.

16. The water treatment system according to any one of claims 13 to 15 comprising a spray nozzle for spraying the treatment water in the form of quadrangular-pyramid-shaped mist.

17. The water treatment system according to any one of claims 13 to 16 comprising:
a receiving tank, below the treatment chamber, for receiving treated water having passed through the discharge space and having been treated; and
air supply means for supplying air to the receiving tank.

18. The water treatment system according to claim 17 comprising a treated-water outflow path for allowing the treated water to flow out of the treatment chamber by making the treated water received by the receiving tank overflow, the treated-water outflow path having an inlet near the bottom of the receiving tank.

19. The water treatment system according to claim 18, wherein the treated-water outflow path is defined by a baffle plate that divides the inside of the receiving tank except for the bottom side of the receiving tank.
